**Europäisches Patentamt**

**European Patent Office**

**Office européen des brevets**

(19)

(11) Veröffentlichungsnummer: **0 084 160**
**B1**

(12) **EUROPÄISCHE PATENTSCHRIFT**

(45) Veröffentlichungstag der Patentschrift:
03.09.86

(51) Int. Cl.⁴: **B 62 M 9/08**

(21) Anmeldenummer: **82111906.2**

(22) Anmeldetag: **22.12.82**

(54) **Kettengetriebe.**

(30) Priorität: **23.12.81 DE 3151072**

(43) Veröffentlichungstag der Anmeldung:
**27.07.83 Patentblatt 83/30**

(45) Bekanntmachung des Hinweises auf die Patenterteilung:
**03.09.86 Patentblatt 86/36**

(84) Benannte Vertragsstaaten:
**DE FR GB IT**

(56) Entgegenhaltungen:
**CH-A-616 493**
**DE-A-2 422 315**
**DE-A-2 828 524**
**FR-A-978 916**
**FR-A-2 348 408**
**US-A-3 867 851**
**US-A-3 956 944**
**US-A-3 969 948**
**US-A-3 995 508**
**US-A-4 030 373**
**US-A-4 129 044**

(73) Patentinhaber: **Kolbus GmbH & Co. KG,
Osnabrücker Strasse 77, D-4993 Rahden (DE)**

(72) Erfinder: **Rathert, Horst, Stiftsallee 120, D-4950
Minden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Kettengetriebe mit einer treibenden und einer getriebenen Scheibe, mit an einer der beiden Scheiben angeordneten radial verstellbaren, gleichmäßig am Umfang verteilten Mitnehmern, die zwecks variabler Übersetzung durch ein Verstellglied frei verschiebbar sowie in der eingestellten Position festlegbar sind und mit einer von den Mitnehmern erfaßten Kette als Zugmittel.

Kettengetriebe mit einer Vielzahl von Übersetzungsstufen sind zur Kraftübertragung aus dem Fahrradbau allgemein bekannt. Aus verschiedenen Gründen ist die Funktion dieser Kettengetriebe nicht zufriedenstellend. So kann das Überwerfen der Kette von einem Zahnkranz auf den anderen lediglich im unbelasteten Zustand und nicht ohne Zeitverlust ausgeführt werden. Dies hat vor allem beim Herunterschalten am Berg einen beträchtlichen Geschwindigkeitsverlust zur Folge. Die nicht fluchtenden Zahnkränze führen zum Schräglaufen der Kette und somit zu einer erheblichen Materialbeanspruchung. Beim Auflaufen der Kette auf das Kettenrad ergibt sich eine seitliche Reibwirkung zwischen Kettenradzahn und Kettenlasche, was nicht nur zum Reibverschleiß, sondern auch zu einer Wirkungsgradminderung führt. Da beim Umschalten die Kettenteilung stets nicht passend zum neuen Kettenrad liegt, besteht leicht die Gefahr des Abspringens der Kette. Letztlich ist auch die Gangabstufung nicht so groß, wie sich aus der Multiplikation der Anzahl der Kettenräder vorn und hinten ergibt, da die äußeren diametral gegenüberliegenden Kettenräder wegen des Schrägzugs gewöhnlich nicht zusammen benutzt werden können.

Aus dem US-Patent 4 129 044 ist ein Kettengetriebe für Fahrräder bekannt, mit einer in einem begrenzten Bereich regelbaren Übersetzung, bestehend aus einer treibenden Kettenräderanordnung, aus einem getriebenen Kettenrad und aus einer Kette als Zugmittel. Die Kettenräderanordnung weist einzelne, gleichmäßig am Umfang verteilte, radial verstellbare Kettenräder und Stützrollen auf, die je auf zwischen einer Hauptscheibe und einer Nebenscheibe konisch verlaufenden Schäften verschiebbar und von dem Zugmittel umschlungen sind, wobei die Schäfte für ein Verdrehen der Kettenräder im Hinblick auf eine Anpassung an die vorgegebene Länge der Kettenglieder wendelförmig ausgestaltet sind. Zwischen Haupt- und Nebenscheibe befinden sich zwei untereinander verbundene, die einzelnen Kettenräder und Stützrollen einschließende, zueinander parallele Rückhaltescheiben mit Radialschlitzen, durch die die Schäfte hindurchgeführt sind.

Zum Verstellen des Übersetzungsverhältnisses ist eine von Hand zu betätigende Einrichtung vorgesehen, die an den Rückhaltescheiben angreift und durch Verschiebung dieser beiden Scheiben an den Schäften eine Durchmesservergrößerung bzw. -verkleinerung der Kettenräderanordnung bewirkt.

Das Kettengetriebe gemäß dem US-Patent 4 129 044 ist nicht stufenlos verstellbar, was darin begründet liegt, daß die gestreckte Länge des Umfangs zwischen benachbarten Kettenrädern nicht zwangsläufig ein ganzes Vielfaches der Kettenteilung sein kann. Von einer Stufenlosigkeit kann allenfalls dann die Rede sein, wenn man ein Aufsetzen der Kette auf die Zähne und einen dadurch bedingten ruckartigen Lauf in Kauf nehmen will.

Die in diesem Getriebe verwendeten Kettenräder und Stützrollen beanspruchen einen nicht geringen Platzbedarf, wodurch eine kompakte Bauweise verhindert und der Übersetzungsbereich stark eingeschränkt wird. Nicht zuletzt ist ein solches Getriebe mit einem übermäßig großen Polygoneffekt behaftet. Da die Kettenräder auf gewendelten Schäften gegen die Kettenzugkraft verdreht werden müssen, sind zur Vergrößerung des Durchmessers der Kettenräderanordnung relativ hohe Verstellkräfte erforderlich.

Getriebe mit band- oder kettenförmigen Zugmitteln finden darüber hinaus im Maschinenbau ihren Einsatz. Ein bekanntes Zugmittelgetriebe mit stufenloser Einstellung der Übersetzung ist das sogenannte PIV-Getriebe, bei dem zwischen zwei radial verzahnten Kegelscheibenpaaren eine Lamellengliederkette läuft. Durch Auseinanderschieben der Kegelscheiben des einen Kegelscheibenpaares und gleichzeitiges Zusammenschieben der Kegelscheiben des anderen Kegelscheibenpaares verändern sich die Laufkreise der Kette und damit die Drehzahl der Abtriebswelle. Die quer beweglichen Lamellen greifen in die Zahnlücken der Kegelscheiben ein und übertragen das eingeleitete Drehmoment formschlüssig.

PIV-Getriebe sind in ihrem Aufbau kompliziert und damit teuer, sie beanspruchen ferner große bauliche Abmaße. Zum Verschieben der Kegelscheiben, was lediglich während des Laufs durchführbar ist, werden hohe Axialkräfte notwendig, verbunden mit einer relativ langen Einstellzeit.

Der Erfindung liegt die Aufgabe zugrunde, ein Kettengetriebe mit einer stufenlos im großen Verstellbereich arbeitenden Übersetzung unter Beibehaltung eines optimalen Wirkungsgrades zu schaffen, bei dem die Verstellung der Übersetzung unter Last und auch im Stillstand erfolgen kann. Darüber hinaus soll das Kettengetriebe im Vergleich zu im Maschinenbau eingesetzten Getrieben einen wesentlich geringeren baulichen Aufwand sowie eine kompakte Bauweise haben. Letztlich soll das Kettengetriebe ein schnelles und leichtes Einstellen der Übersetzung ermöglichen.

Ausgehend von einem Kettengetriebe mit einer treibenden und einer getriebenen Scheibe, mit an einer der beiden Scheiben angeordneten radial verstellbaren, gleichmäßig am Umfang verteilten Mitnehmern, die zwecks variabler Übersetzung durch ein Verstellglied frei verschiebbar sowie in der eingestellten Position festlegbar sind und mit einer von den Mitnehmern erfaßten Kette als Zugmittel ist die Erfindung gekennzeichnet durch mindestens an einer der beiden Scheiben angeordnete Mitnehmer mit jeweils einem Klemmkörper wobei jeweils ein Mitnehmer zusammen mit dem zugeordneten Klemmkörper einen nach außen geöffneten Keil zum Eingriff mit der Kette bildet derart, daß Mitnehmer und Klemmkörper auf die Kette im Sinne einer kraftschlüssigen Mitnahme zangenartig einwirken, wobei die Mitnehmer gegen die Radialkomponente der Kettenzugkraft an der Scheibe selbsthemmend sind, indem die über die Kettenglieder an den Klemmkörpern erzeugte Keilwirkung auf die Berührungsflächen der Klemmkörper mit den Scheiben übertragen wird, und durch ein zwischen Zugtrum und Leertrum installiertes, in Radialrichtung positionierbares Verstellglied, dem die Mitnehmer zusammen mit den Klemmkörper während ihres Umlaufs zur freien Radialverschiebung zuführbar sind.

Durch die Gestaltung der Radialführung der Mitnehmer an der Scheibe bzw. an den Scheiben tritt Selbsthemmung auf, wenn Belastungen von der Kette her eine Radialverschiebung bewirken wollen. Andererseits aber kann das Verstellglied die Mitnehmer frei verschieben, wobei die Radialverstellung dann nahezu kraftlos erfolgt. Die durch das Verstellglied laufenden Mitnehmer werden nacheinander von diesem auf den seiner Position entsprechenden Radius verschoben, d. h., während einer Scheibenumdrehung werden alle Mitnehmer auf den gewünschten Radius gebracht; dabei kann die Verstellung des Verstellgliedes kontinuierlich oder auch abrupt erfolgen. Die maximale radiale Verstellung pro Scheibenumdrehung ist durch die Anlaufschräge des Verstellgliedes gegeben, um Blockieren durch zu steilen Anlaufwinkel zu vermeiden.

Die bei der Durchmesserveränderung der verstellbaren Scheibe anfallende Kettenlänge wird durch einen Spanner aufgefangen, der auch für die zur Übertragung des Kettenzuges erforderliche Vorspannkraft im Leertrum der Kette sorgt.

Der Kettentrieb kann in weiterführender Ausgestaltung mit zwei durchmesserveränderbaren Scheiben ausgeführt werden. An der treibenden und an der getriebenen Scheibe erfolgt die Radialverstellung durch ein Verstellglied oder andere Verstelleinrichtungen in jeweils entgegengesetzter Richtung. Anstelle der Rollenkette kann eine billigere Bolzenkette eingesetzt werden, Drehrichtungsumkehr und Drehmomentenumkehr sind möglich.

Der Einsatzbereich des erfindungsgemäßen Kettengetriebes beschränkt sich nicht nur auf Fahrradantriebe, sondern kann auf alle motorgetriebenen Fahrzeuge sowie Transporteinrichtungen kleinerer Leistung erweitert werden, bei denen die Kraftübertragung ohnehin konstruktiv durch Zugmittel erfolgt, um durch eine leicht zu handhabende stufenlose Verstellung die verfügbare Leistung optimal auszunutzen und den Wirkungsgrad der Gesamtanordnung erheblich zu steigern.

Die Ausführung des Prinzips mit zwei Durchmesser verstellbaren Scheiben gestattet in Verbindung mit einem geschlossenen Gehäuse die Erweiterung des Einsatzbereichs auf schnellaufende Getriebe mit höherer Leistung im allgemeinen Maschinenbau. Dabei wird die Kette zweckmäßigerweise massiv ausgeführt und ihre Flanken, die auf die kegeligen Flächen der Mitnehmer drücken, sind diesen angepaßt, um eine flächige Anpressung und damit große übertragbare Umfangskraft zu erreichen. Für die hohen Drehzahlen sind die radial verstellbaren Mitnehmer gegen die Fliehkraftwirkung im Bereich zwischen Zugtrum und Leertrum gesichert, während die Verstellung durch das Verstellglied weiterhin frei erfolgen kann.

In einer abgeänderten Ausgestaltung kann eine Verstellung des ganzen Verstellbereichs im Stillstand erfolgen, wenn die Verstellung der Mitnehmer durch eine Einrichtung zentrisch an allen Mitnehmern der Scheibe bzw. der Scheiben gleichzeitig erfolgt und der Kettenspanner dabei gelüftet wird.

Anhand der Zeichnungen soll die Erfindung beschrieben und näher dargestellt werden. Es zeigen

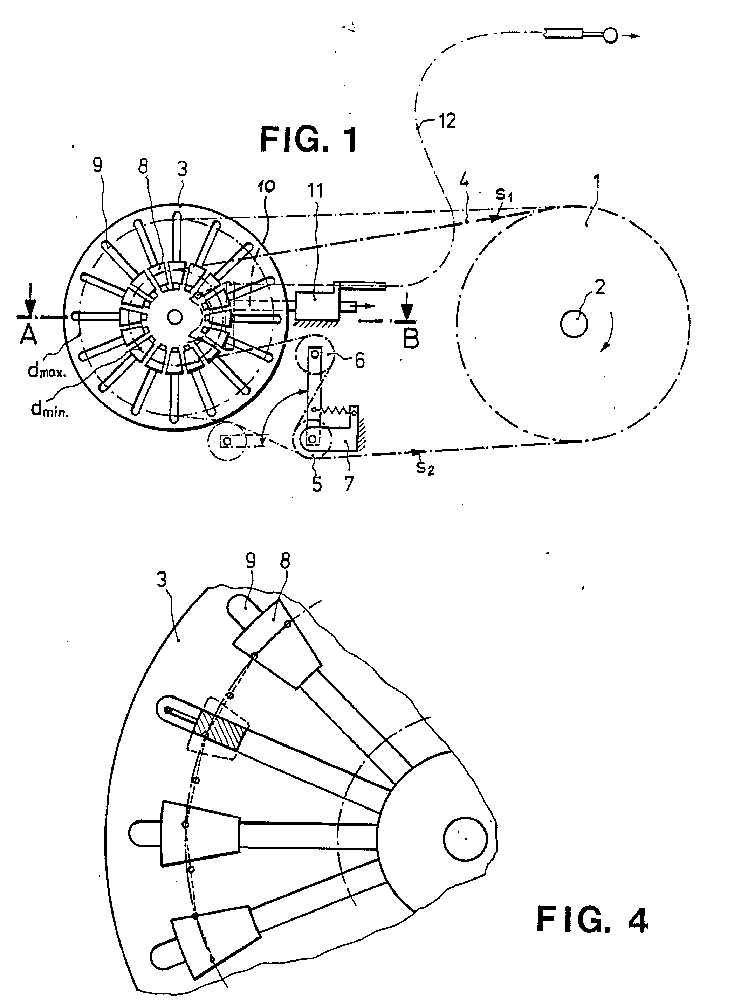

Fig. 1 ein erstes Anwendungsbeispiel der Erfindung in einer Gesamtanordnung,

Fig. 2 einen Schnitt A-B in Fig. 1, vergrößert dargestellt,

Fig. 3 eine Ansicht in Richtung C gemäß Fig. 2, ebenfalls vergrößert dargestellt,

Fig. 4 eine Ausschnittsvergrößerung der veränderbaren Kettenscheibe,

Fig. 5 ein zweites Anwendungsbeispiel in einer vergrößert gezeigten Teilanordnung,

Fig. 6 eine Schnittansicht gemäß der Linie D-E in Fig. 5.

Die Gesamtanordnung des ersten Ausführungsbeipiels zeigt eine Kettenscheibe 1, die von einer treibenden Welle 2 in Umlauf versetzt wird, und eine Kettenscheibe 3, die über eine Rollenkette 4 ihren Antrieb erhält. Die Kette wird durch einen Schwenkspanner mit einem Umlenkrad 5 und einem Spannrad 6, gelagert an einem im Gestell schwenkbar befestigten Teil 7, gespannt. Auf der Kettenscheibe 3 sind gleichmäßig am Umfang verteilte Mitnehmer 8, 13-16 in Nuten 9 radial verschiebbar angeordnet. Die Radialverstellung der Mitnehmer erfolgt im Bereich zwischen Zugtrum und Leertrum der Kette im Durchlauf durch ein Gabelstück 10, das in einer am Gestell befestigten Führung 11 verschiebbar ist und von einer Fernbetätigung 12 verstellt werden kann. Um ein störungsfreies Einlaufen der Mitnehmer 8, 13-16 zu erreichen, weist der innere Teil des Gabelstücks eine starke Krümmung auf, während der äußere Teil wenig gebogen oder gerade ist.

Beim kleinsten Wirkdurchmesser $d_{min}$ an der Kettenscheibe 3 liegen die Mitnehmer dicht zusammmen, bis zum größten Wirkdurchmesser $d_{max}$ hingegen vergrößert sich der Abstand der Mitnehmer untereinander kontinuierlich. Der bei Ketten üblich Polygoneffekt bleibt zwischen dem kleinsten und dem größten Wirkdurchmesser unverändert und entspricht im dargestellten Fall einem Kettenrad von sechszehn Zähnen.

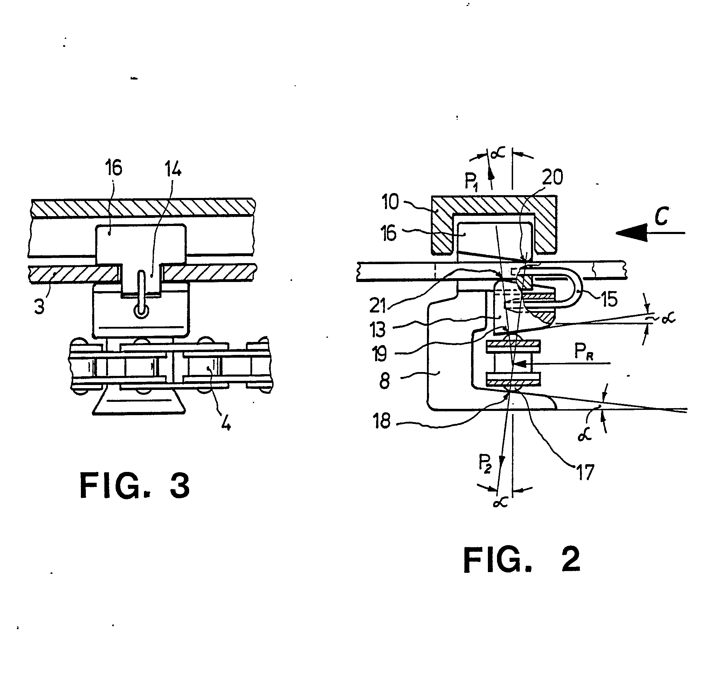

In Fig. 2 bis 4 ist ein Ausführungsbeispiel der selbsthemmenden Radialführung der Mitnehmer 8, 13-16 verdeutlicht. Die Klemmstücke 13 werden durch Eingreifen ihres Ansatzes 14 in die Mitnehmer 8 in Umfangsrichtung fixiert und durch eine Biegefeder 15 an die Scheibe gepreßt, um ein selbsttätiges Verstellen der Mitnehmer durch Fliehkraft oder Gewicht zu vermeiden. Die radiale Verstellung durch das Gabelstück 10 erfolgt am herausstehenden Ende 16 des Mitnehmers. Läuft die Kette mit ihren Bolzen 17 in den von dem Teil 8 des Mitnehmers und dem Klemmstück 13 gebildeten Bereich, so drücken die Kettenbolzen auf die schrägliegenden Flächen an den mit 18 und 19 bezeichneten Stellen und erzeugen durch die Radialkomponente $P_R$ der Zugkraft die Kräfte $P_1$ und $P_2$, die wiederum entsprechende Reaktionskräfte an den Berührungslinien 20 und 21 der Teile 8 und 13 mit der Scheibe 3 erzeugen. Diese Reaktionskräfte sind in einem Winkel $\alpha$ gegen die Scheibenebene gerichtet, der kleiner als der Reibungswinkel ist, so daß Selbsthemmung auftritt. Winkel $\alpha$ wird 6°, wenn man davon ausgeht, daß der Reibwert nicht kleiner als 0,1 ist. Die Übertragung der Kettenzugkraft von der Kette 4 auf die Scheibe 3 erfolgt nach dem Prinzip der Umschlingungsreibung $S_1 = S_2 \times e^{\mu'\alpha}$. Dabei ist $S_2$ der im Leertrum vom Spanner erzeugte Kettenzug, $\mu'$ die Keilreibungszahl und $\alpha$ der Umschlingungswinkel im Bogenmaß. Für die Übertragung der Kettenzugkraft $S_1$ sind nur minimale Werte von $S_2$ erforderlich.

Da sowohl Klemmstück 13 als auch der Teil 8 des Mitnehmers um ihre Berührungslinien 20 und 21 mit der Scheibe 3 leicht schwenken können, kann ein Festkeilen der Kettenbolzen zwischen den Teilen 8 und 13 erfolgen. Die Anordnung wirkt wie ein Kniehebelsystem, wobei die Hebel aus der Verbindungslinie der Berührungspunkte 18 und 20 (Kettenbolzen 17 mit Teil 8 und Scheibe 3 mit Teil 8) bzw. der Verbindungslinie der Berührungspunkte 19 und 21 (Kettenbolzen 17 mit Teil 13 und Scheibe 3 mit Teil 13) gebildet werden.

Die Kette kann sich beim Ablaufen nicht festklemmen, sie wird bei Nachlassen der Radialkomponente $P_R$ durch die schräg nach oben gerichtete Kräfte $P_1$ und $P_2$ selbsttätig gelüftet. Teil 8 des Mitnehmers und Klemmstück 13 werden durch die Feder 15 so in Normalstellung gehalten, daß ein leichtes Schwenken beider Teile radial nach innen beim Auflaufen der Kette und nach außen beim Ablaufen der Kette möglich ist, um somit die freie Beweglichkeit des Kniehebelsystems zu gewährleisten. Die Teile 8 und 13 sind an den Berührungslinien mit der Scheibe ballig ausgeführt.

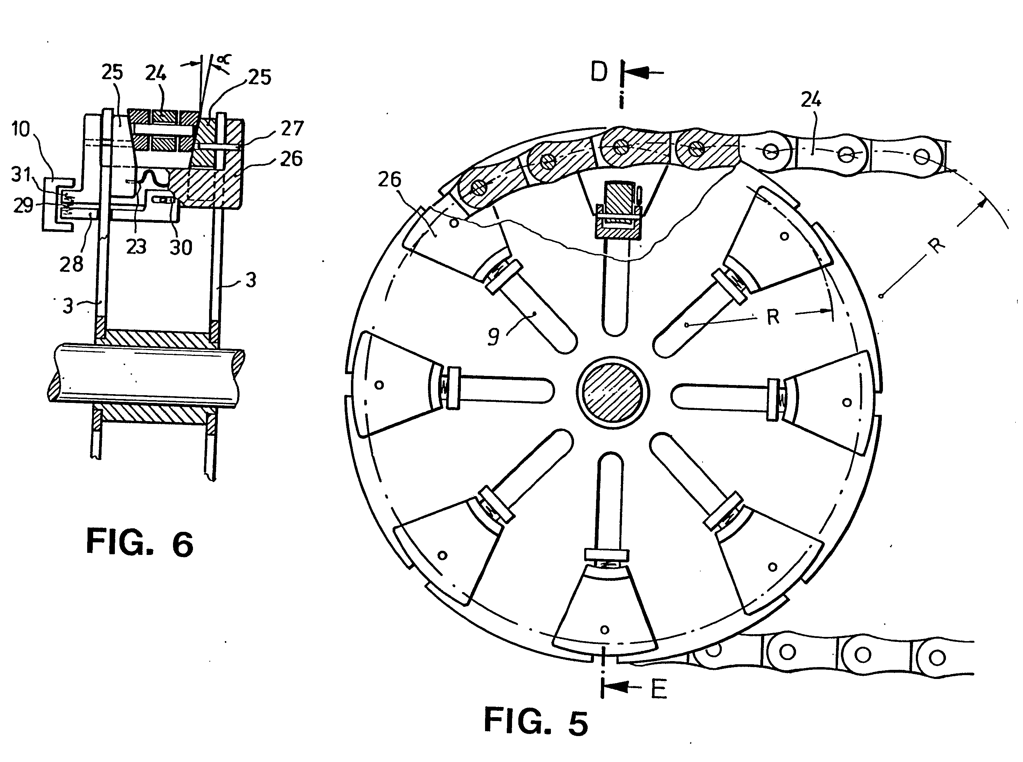

In den Fig. 5 und 6 wird ein zweites Anwendungsbeispiel dargestellt, das für hohe Drehzahlen und hohe Umfangskraft geeignet ist. Die Kettenscheibe ist hierbei als Doppelscheibenanordnung ausgestaltet. Übertragen wird die Kraft durch eine Massivkette 24, die an Klemmstücken 25 anliegt. Die Kettenglieder sind im Radius R gekrümmt und weisen ein keilförmiges Profil mit dem Winkel $\alpha$ auf, so daß ihre kegeligen Flanken an den kegeligen Flächen der Klemmstücke 25 mit dem gleichen Radius und dem gleichen Winkel $\alpha$ flächig anliegen, was hohe Umfangskräfte erlaubt. Die Radialkomponente der Kettenkraft erzeugt durch Keilwirkung Reibungskräfte zwischen den Klemmstücken 25, dem Teil 26 des Mitnehmers und der Doppelscheibe 3, die eine radiale Verstellung durch Kettenkraft selbsthemmend verhindern und die Umfangsmitnahmekraft erzeugen.

Durch Stifte 27 sind die Klemmstücke 25 gegen radiales Verschieben nach außen gegenüber dem Teil 26 der Mitnehmer gesichert. Die Klemmstücke werden durch eine Feder 23 leicht gegen die Scheiben gedrückt. Die dadurch erzeugte Reibungskraft ist jedoch minimal und reicht bei höherer Drehzahl nicht gegen die Fliehkraftwirkung der Mitnehmer aus. Um dem entgegen zuwirken, ist am Teil 26 der Mitnehmer ein Hebel 28 in einem Langloch 30 axial leicht verschiebbar gelagert und greift im Bereich der Nuten 9 mit quer verlaufenden Ausnehmungen auf die eine der beiden Scheiben 3. Eine Druckfeder 29 zwischen dem Hebel 28 und dem Teil 26 der Mitnehmer bewirkt ein Verkanten des Hebels, so daß eine radiale Verschiebung nach außen durch Selbsthemmung verhindert und die Fliehkraft aufgefangen wird. Radiale Verschiebung nach innen bleibt möglich durch Einwirken des Gabelstücks auf die Nase 31 des Teiles 26, während radiale Verschiebung nach außen über das Gabelstück 10 erfolgt, das bei Bewegung nach außen entgegen der Wirkung der Feder 29 den Sperrhebel lüftet und die Mitnehmer radial verschiebt.

**Patentansprüche**

1. Kettengetriebe mit einer treibenden und einer getriebenen Scheibe, mit an einer der beiden Scheiben angeordneten radial verstellbaren, gleichmäßig am Umfang verteilten Mitnehmern, die zwecks variabler Übersetzung durch ein Verstellglied frei verschiebbar sowie in der eingestellten Position festlegbar sind und mit einer von den Mitnehmern erfaßten Kette als Zugmittel, gekennzeichnet durch mindestens an einer der beiden Scheiben (1; 3) angeordnete Mitnehmer (8, 13-16; 21- 31) mit jeweils einem Klemmkörper (13; 25, wobei jewils ein Mitnehmer zusammen mit dem zugeordneten Klemmkörper einen nach aussen geöffneten Keil zum Eingriff mit der Kette bildet derart, daß Mitnehmer und Klemmkörper auf Kette (4; 24) im Sinne einer kraftschlüssigen Mitnahme zangenartig einwirken, wobei die Mitnehmer (8, 13-16; 25-31) gegen die Radialkomponente der Kettenzugkraft an der Scheibe (1; 3) selbsthemmend sind, indem die über die Kettenglieder an den Klemmkörpern (13; 25) erzeugte Keilwirkung auf die Berührungsflächen der Klemmkörper mit den Scheiben übertragen wird, und durch ein zwischen Zugtrum und Leertrum installiertes, in Radialrichtung positionierbares Verstellglied (10), dem die Mitnehmer (8, 13-16; 25-31) zusammen mit den Klemmkörpern während ihres Umlaufs zur freien Radialverschiebung zuführbar sind.

2. Vorrichtung nach Anspruch 1, dadurch gekennzeichnet, daß die Kette (4; 24) auf vorzugsweise 6- zur Ebene der Scheibe (1; 3), in Radialrichtung parallel zur Umfangsrichtung angeordnete schräge Flächen der Klemmkörper (13; 25) drückt.

3. Vorrichtung nach Anspruch 1 oder 2, dadurch gekennzeichnet, daß die Scheiben (1; 3) als Doppelscheibenanordnung vorgesehen sind, in der die Mitnehmer (8, 13-16; 25-31) in Radialschlitzen (9) verschiebbar sind, wobei die auf die Kette (4; 24) einwirkenden Klemmkörper (13; 25) an beiden Scheiben selbsthemmend sind.

4. Vorrichtung nach Anspruch 1 bis 3, dadurch gekennzeichnet, daß das freie Verschieben der Mitnehmer (8, 13-16; 25-31) in radialer Richtung im Bereich zwischen Zugtrum und Leertrum durch gegen die Zentrifugalkraft wirkende Federanpressung der Klemmkörper (13; 25) gegen die Scheiben (1; 3) gebremst wird, andererseits die Mitnehmer (8, 13-16; 25-31) über das Verstellglied (10) frei verschiebbar sind.

5. Vorrichtung nach Anspruch 1 bis 4, dadurch gekennzeichnet, daß die Mitnehmer (8, 13-16; 25-31) gegen Verschieben infolge Zentrifugalkraft im Bereich zwischen Leertrum und Zugtrum durch selbsthemmend auf die Scheibe (1; 3) wirkende Gesperre (28, 29) gesichert sind, die über das Verstellglied (10) entriegelbar sind.

6. Vorrichtung nach Anspruch 1 bis 5, dadurch gekennzeichnet, daß die Glieder der Kette (4; 24) massiv ausgeführt und ihre Flanken der kegeligen Fläche der Mitnehmer (8, 13-16; 25-31) angepaßt sind.

7. Vorrichtung nach Anspruch 1 bis 6, dadurch gekennzeichnet, daß die Klemmkörper (13; 25) und der diese aufnehmende Teil der Mitnehmer (8; 26) um eine Berührungslinie an der Scheibe (1; 3) leicht radial kippbar sind, und zwar nach innen beim Auflaufen der Kette (4; 24) und nach außen beim Ablaufen der Kette (4; 24).

8. Vorrichtung nach Anspruch 7, dadurch gekennzeichnet, daß die Klemmkörper (13; 25) und der diese aufnehmende Teil der Mitnehmer (8; 26) im Bereich der Berührungslinie mit der Schelbe (1; 3) ballig geformt sind.

9. Vorrichtung nach Anspruch 1 bis 8, dadurch gekennzeichnet, daß die freie Radialverschiebung der Mitnehmer (8, 13-16; 21-31) über eine Fernverstelleinrichtung (12) erfolgt.

10. Vorrichtung nach Anspruch 1 bis 9, gekennzeichnet durch elne bei Aufhebung der Kettenspannung alle Mitnehmer (8; 13-16; 25-31) gleichzeitig radial verschiebbare Verstelleinrichtung.

## Claims

1. Chain mechanism comprising a driving and a driven disc, drivers which are arranged radially adjustably on one of the two discs uniformly distributed about the periphery and which for variable transmission ratio are freely displaceable by an adjusting member and lockable in the position set and a chain engaged by the drivers as traction means, characterized by drivers (8, 13-16; 21-31) which are arranged on at least one of the two discs (1; 3) and each comprise a clamping body (13; 25), each driver together with the associated clamping body forming an outwardly opened wedge for engagement with the chain in such a manner that driver and clamping body act in tongs-like manner on the chain (4; 24) in the sense of a force-locking entraining, the drivers (8, 13-16; 25-31) being self-locking against the radial component of the chain traction force on the disc (1; 3) in that the wedge action generated via the chain links on the clamping bodies (13; 25) is transmitted onto the contact faces of the clamping bodies with the discs, and by an adjusting member (10) which is installed between traction run and idling run and which is positionable in the radial direction and to which the drivers (8, 13-16; 25-31) together with the clamping bodies are suppliable during their circulation for free radial displacement.

2. Mechanism according to claim 1, characterized in that the chain (4; 24) presses against inclined faces of the clamping bodies (13; 25) arranged preferably at 6° to the plane of the disc (1; 3) in radial direction parallel to the peripheral direction.

3. Mechanism according to claim 1 or 2, characterized in that the discs (1; 3) are provided as double disc arrangement in which the drivers (8, 13-16; 25-31) are displaceable in radial slots (9), the clamping bodies (13; 25) acting on the chain (4; 24) being self-locking on both discs.

4. Mechanism according to claim 1 to 3, characterized in that the free displacement of the drivers (8, 13-16; 25-31) in the radial direction in the region between the traction run and idling run is retarded by spring pressure of the clamping bodies (13; 25) acting against the centrifugal force against the discs (1; 3) but on the other hand the drivers (8, 13-16; 25-31) are freely displaceable via the adjusting member (10).

5. Mechanism according to claims 1 to 4, characterized in that the drivers (8, 13-16; 25-31) are secured against displacement due to centrifugal force in the region between idling run and traction run by a ratchet mechanism (28, 29) which acts self-locking on the disc (1; 3) and which can be unlocked via the adjusting member (10).

6. Mechanism according to claims 1 to 5, characterized in that the links of the chain (4; 24) are made solid and their flanks are adapted to the conical face of the drivers (8, 13-16; 25-31).

7. Mechanism according to claims 1 to 6, characterized in that the clamping bodies (13; 25) and the part of the drivers (8; 26) receiving them are slightly radially tiltable about a contact line at the disc (1; 3), inwardly when running onto the chain (4; 24) and outwardly when running off the chain (4; 24).

8. Mechanism according to claim 7, characterized in that the clamping bodies (13; 25) and the part of the drivers (8; 26) receiving them are made spherical in the region of the contact line with the disc (1; 3).

9. Mechanism according to claim 1 to 8, characterized in that the free radial displacement of the drivers (8, 13-16; 21-31) is effected via a remote-adjusting means (12).

10. Mechanism according to any one of claims 1 to 9, characterized by an adjusting means simultaneously radially displacing all the drivers (8; 13-16; 25-31) on cancellation of the chain tension.


**Revendications**

1. Transmission à chaîne, avec une roue menante et une roue menée, avec, sur l'une de ces deux roues, des organes d'entraînement déplaçables radialement et répartis uniformément sur le pourtour, lesquels, en vue d'une transmission variable, sont librement déplaçables en translation, et fixables dans la position adoptée, par un organe de réglage, avec enfin, comme moyen de traction, une chaîne saisie par les organes d'entraînement, caractérisée par le fait qu'elle comporte, disposés au moins sur une des deux roues (1; 3), des organes d'entraînement (8, 13-16; 21-31) munis chacun d'un corps de serrage (13; 25), chaque organe d'entraînement formant avec le corps de serrage correspondant un coin ouvert vers l'extérieur pour venir en prise avec la chaîne en sorte qu'organe d'entraînement et corps de serrage agissent en genre de pince sur la chaîne (4; 24) dans le sens d'un entraînement en assemblage par effet de force et les organes d'entraînement (8,13-16; 25-31) étant autoblocants sur ladite roue (1;3) contre la composante radiale de la force de traction de la chaîne du fait que l'effet de coin engendré à travers les maillons de chaîne sur les corps de serrage (13; 25) est transmis aux surfaces de contact desdits corps de serrage avec les roues, ladite transmission à chaîne comportant aussi, installé entre le brin de traction et le brin inerte, un organe de réglage (10) positionnable en direction radiale auquel les organes d'entraînement (8, 13-16; 25-31) sont amenables, en vue de leur libre translation radiale, en même temps que les corps de serrage, pendant leur rotation.

2. Transmission à chaîne selon revendication 1, caractérisée par le fait que la chaîne (4; 24) appuie sur des surfaces des corps de serrage (13; 25) inclinées de préférence de 6° sur le plan de la roue (1; 3) en direction radiale et disposées parallèlement à la direction périphérique.

3. Transmission à chaîne selon revendication 1 ou 2 caractérisée par le fait que les roues (1; 3) sont établies en un dispositif de double roue dans lequel les organes d'entraînement (8, 13-16; 25-31) sont déplaçables en translation dans des fentes radiales (9) et sur les deux roues duquel le corps de serrage (13; 25) agissant sur la chaîne (4, 24) sont autoblocants.

4. Transmission à chaîne selon revendications 1 à 3 caractérisée par le fait que la translation libre des organes d'entraînement (8, 13-16; 25-31) en direction radiale est freinée dans la zone comprise entre le brin de traction et le brin inerte par appui élastique, à l'encontre de la force centrifuge, des corps de serrage (13; 25) contre les roues (1;c 3) et que d'autre part les organes d'entraînement (8, 13-16; 25-31) sont librement déplaçables en translation par organe de réglage (10).

5. Transmission à chaîne selon revendications 1 à 4 caractérisée par le fait que les organes d'entraînement (8, 13-16; 25-31) sont empechés de se déplacer en translation par effet de force centrifuge dans la zone comprise entre le brin de traction et le brin inerte par des encliquetages (28, 29) agissant en autoblocage sur la roue (1; 3), lesquels sont déverrouillables par l'organe de réglage (10).

6. Transmission à chaîne selon revendication 1 à 5 caractérisée par le fait que les maillons de la chaîne (4; 24) sont établis massifs et leurs flancs sont adaptés à la surface conique des organes d'entraînement (8, 13-16; 25-31).

7. Transmission à chaîne selon revendications 1 à 6 caractérisée par le fait que le corps de serrage (13; 25) et la partie des organes d'entraînement (8; 26) qui les maintient sont légèrement basculables radialement sur le pourtout d'une ligne de contact avec la roue (1; 3), cela vers l'intérieur à la venue en prise de la chaîne, vers l'extérieur à la sortie de prise de la chaîne.

8. Transmission à chaîne selon revendication 7 caractérisée par le fait que les corps de serrage (13; 25) et la partie des organes d'entraînement (8; 26) qui les maintient ont une forme bombée dans la zone de leur ligne de contact avec la roue (1; 3).

9. Transmission à chaîne selon revendications 1 à 8 caractérisée par le fait que la translation radiale libre des organes d'entraînement (8, 13-16; 21-31) a lieu à l'aide d'un dispositif de téléréglage (12).

10. Transmission à chaîne selon revendications 1 à 9 caractérisée par un dispositif de réglage déplaçant radialement tous les organes d'entraînement (8, 13-16; 25-31) en cas de suppression de la tension de la chaîne.

0 084 160

# FIG. 1

# FIG. 4

1

FIG. 3

FIG. 2

FIG. 6

FIG. 5

0 084 160